# EUROPEAN PATENT APPLICATION

(11) **EP 4 567 308 A1**
(43) Date of publication of application: **11.06.2025**
(21) Application number: 24215067.0
(22) Date of filing: 25.11.2024
(51) Int. Cl.: F16J 15/3228, F16J 15/34

(54) **APPARATUS FOR SHIELDING OR SEALING A ROTARY INTERFACE OF A ROTARY ACTUATOR OR OTHER ROTATING DEVICE TO PREVENT INGRESS OF ABRASIVE MEDIA**

(30) Priority: 07.12.2023 US 202363607359 P
(71) Applicant: MacDonald, Dettwiler and Associates Inc., Brampton, Ontario L6Y 6K7 (CA)
(72) Inventor: Grandy, Drew, Brampton, Ontario, L6Y 6K7 (CA); Hay, Gavin, Brampton, Ontario, L6Y 6K7 (CA); Sachdev, Tej Singh, Brampton, Ontario, L6Y 6K7 (CA); Sprawson, Geoff, Brampton, Ontario, L6Y 6K7 (CA)
(74) Representative: Grünecker Patent- und Rechtsanwälte PartG mbB

(57) **Abstract**

An apparatus for shielding a rotary interface to prevent ingress of abrasive media is provided. The apparatus includes a flat metallic ring (108) that is installed between a rotary housing (102) containing a rotating component and a stationary housing (104) containing a stationary component configured to interface with the rotating component to provide rotational motion. The rotary housing is configured to couple to the stationary housing and rotate with respect to the stationary housing when coupled. The flat metallic ring is preloaded into a conical shape when installed between the rotary housing and the stationary housing.

## Description

### Technical Field

The following relates generally to seals for rotary devices used in space-based applications, and more particularly to sealing rotary actuator systems in environments with abrasive media such as soil or dust.

### Introduction

Actuators may be required to survive immersion in soil for a significant portion of their in-service lifetime. Abrasive media, such as soil or dust, can cause the actuator to fail through ingress of soil or dust particles to the actuator.

One existing approach to sealing a rotary actuator in harsh environments uses a combination of an energized polymer seal and a cloth (felt or similar) wiper often with a labyrinth path. Combinations of the presence of abrasive media and thermal extremes or large temperature changes (effect of the different CTE of the materials) can lead to failure of such a seal.

Space applications including lunar, Martian, and planetary operations can expose critical rotary interfaces of actuators and other rotating devices of robotic systems to particularly harsh conditions that include the presence of abrasive media the can foul actuator interfaces and temperature changes and extremes that can introduce failure conditions and complications related to coefficient of thermal expansion (CTE) between materials.

Accordingly, there is a need for an improved shielding apparatus for protecting a rotary actuator or other rotating device from ingress of abrasive media, such as found in space-based applications, that overcomes at least some of the disadvantages of existing apparatuses.

### Summary

An apparatus for shielding a rotary interface to prevent ingress of abrasive media is provided. The apparatus includes a flat metallic ring that is installed between a rotary housing containing a rotating component and a stationary housing containing a stationary component configured to interface with the rotating component to provide rotational motion. The rotary housing is configured to couple to the stationary housing and rotate with respect to the stationary housing when coupled. The flat metallic ring is preloaded into a conical shape when installed between the rotary housing and the stationary housing.

In an embodiment, the metallic ring is stainless steel.

In an embodiment, the metallic ring is dry film lubricated.

In an embodiment, the metallic ring is dry film lubricated by applying a dry film lubricant on all sliding surfaces of the metallic ring.

In an embodiment, the dry film lubricant is Molybdenum Disulphide with an inorganic binder.

In an embodiment, a v-spring shield is disposed between the stationary housing and the apparatus.

In an embodiment, the rotary housing includes a first ring deforming feature and the stationary housing includes a second ring deforming feature, and the first and second ring deforming features deform the metallic ring into the conical shape.

In an embodiment, the preload for deforming the metallic ring is applied using a two-point contact with the metallic ring along the circumference of the metallic ring, wherein a first contact is provided by the rotary housing and a second contact is provided by the stationary housing.

In an embodiment, the first ring deforming feature is a chamfer and the second ring deforming feature is a lip or shoulder.

In an embodiment, the metallic ring includes an inner diameter and an outer diameter on opposite sides of the metallic ring, and the metallic ring bends from the second ring deforming feature on the inner diameter and the first ring deforming feature on the outer diameter.

In an embodiment, the metallic ring is preloaded onto a flat annular surface of the stationary housing and onto a shoulder or lip of the rotary housing, the annular surface and shoulder for reacting the preload of the metallic ring such that the metallic ring forms a conical shape under preload, thereby remaining in contact with the stationary housing and the rotary housing during rotary motion.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is an exploded perspective view of a portion of a rotary actuator including a seal shield for protecting a rotary interface of the rotary actuator, according to an embodiment;
Figure 2 is a schematic side view of a rotary actuator including the seal shield of Figure 1, the seal shield being deformed by deforming features on the rotary housing and stationary housing of the rotary actuator, according to an embodiment;
Figure 3A is a schematic front view of the seal shield of Figure 1 in an undeformed or undeflected state;
Figure 3B is a schematic side view of the seal shield of Figure 1 in an undeformed or undeflected state;
Figure 3C is a schematic diagram of the seal shield of Figure 3A taken along line A-A;
Figure 4A is a schematic front view of the seal shield of Figure 1 in a deformed or deflected state;
Figure 4B is a schematic side view of the seal shield of Figure 1 in a deformed or deflected state; and
Figure 4C is a schematic diagram of the seal shield of Figure 4A taken along line A-A.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to seals for rotary devices used in space-based applications, and more particularly to sealing rotary actuator systems in environments with abrasive media such as soil or dust.

The present disclosure provides an apparatus for sealing or shielding a rotary interface of a rotating device from ingress of abrasive media such soil or dust. While the rotary interface shield of the present disclosure has particular applicability to space-based applications, the rotary interface shield may also be used in rotating devices in non-space or terrestrial applications where abrasive material may be present. Further, while the present disclosure describes the rotary interface shield in the context of a rotary actuator, it is to be understood that the rotary interface shield may be used in any rotating device.

In embodiments, the shielding apparatus of the present disclosure may be used in a rotary actuator, robot, or other rotating device in an abrasive environment, such as in planetary exploration, lunar mobility, or certain terrestrial jobs.

The rotary interface shield may be particularly well suited for use in robotics applications for lunar, Martian, and planetary environments, and dust or soil abrasives environments.

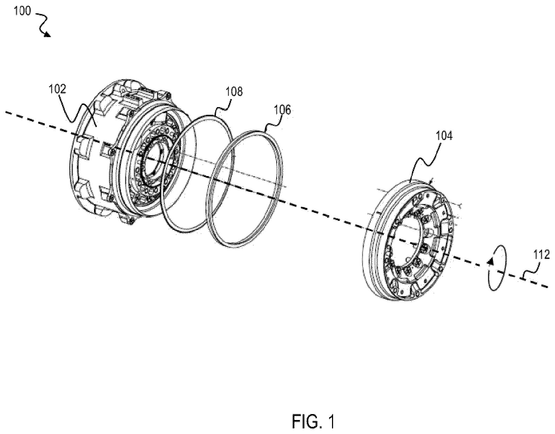

Referring now to Figure 1, shown therein is an exploded view of a portion of a rotary actuator 100, according to an embodiment. Portions of the rotary actuator 100 have been omitted for simplicity.

The rotary actuator 100 may be a component of a robotic system. When in service or operation, the rotary actuator 100 may be exposed to blown dust or soil immersion. In a particular example, the rotary actuator 100 may be a vehicle steering and drive actuator. Vehicle steering and drive actuators may be required to survive immersion in soil for a significant portion of their in-service lifetime.

Lunar, Martian, and planetary environments can include both abrasive media (soil, dust) and thermal extremes. Abrasive media can foul interfaces of the actuator 100 that are exposed to the external environment. Thermal extremes can cause components to fail, such as through CTE mismatch between materials.

The rotary actuator 100 is an actuator that produces a rotary motion or torque. Motion produced by the actuator may be continuous, as in an electric motor, or movement to a fixed angular position, as in a servomotor or stepper motor.

The actuator 100 includes a housing structure including rotary housing 102 (also referred to a rotor housing or rotational housing 102) and a stationary housing 104 (also referred to as a stator housing 104).

The rotary housing 102 houses a moving or rotating component (or rotor) of the actuator 100. The stationary housing 104 houses a stationary component (or stator) of the actuator 100.

The rotary housing 102 and the stationary housing 104 (and in particular their rotating and stationary components housed therein) are coupled to one another, forming a rotary or rotational interface between the housings 102, 104. In operation, the rotary housing 102 rotates about rotational axis 112 while the stationary housing 104 is stationary.

The actuator 100 includes a seal 106. The seal 106 is annular or ring shaped. The seal 106 is disposed between the rotary housing 102 and the stationary housing 104 at the rotational interface. In some embodiments, the seal 106 may not be present and only seal shield 108, described below, is used.

The seal 106 may be a spring energized seal. In an embodiment, the seal 106 is a polytetrafluoroethylene (PTFE) spring energized seal. In an embodiment, the seal 106 is a v-spring seal.

In embodiments where the seal 106 is a polymer seal, different CTE of the materials (CTE mismatch), particularly in response to thermal extremes of space (e.g., Mars environment), may cause the use of the seal 106 alone (i.e., without seal shield 108, described below) to fail in the prevention of abrasive media ingress.

The actuator 100 includes a seal shield 108 for preventing ingress of abrasive media into the rotary actuator and into a rotational interface of the rotor and stator.

The seal shield 108 is disposed at the rotary interface between the rotary housing 102 and the stationary housing 104 of the actuator 100. In particular, the seal shield 108 is disposed between the v-spring seal 106 and the rotary housing 102.

The seal shield 108 comprises an annular disk or ring.

The ring is composed of metal. In an embodiment, the metal is stainless steel. In an embodiment, the stainless steel is 15-5PH stainless steel.

The ring is thin. In an embodiment, the ring is a 0.007" thick annular disk.

The ring may be lubricated with a dry film lubricant. The dry film lubricant may be applied on all sliding surfaces of the ring. The dry film lubricant manages sliding contact. In an embodiment, the dry film lubricant is molybdenum disulphide with an inorganic binder.

The ring is low drag. Primarily, the presence of the dry film lubricant permits low drag during rotation. A light preload, as opposed to a high preload, also permits low drag.

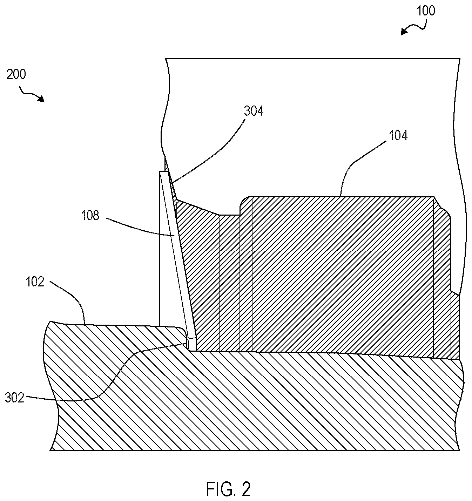

The ring is a flat ring or annular disk that is lightly preloaded or deformed into a conical or cupped shape when the ring is installed between the rotary and stationary housings 102, 104 of the actuator 100. Such deformation, according to an embodiment, is shown in close up view 200 of Figure 2. The ring 108 is preloaded onto flat annular surfaces 304 of the stationary housing 104 and onto a shoulder 302 of the rotary housing 102. An annular surface/shoulder 304, 302 is used to react the preload of the ring 108. The conical shape of the ring 108 results after preload is applied. The ability to form a conical shape under preload, while not being damaged, ensures that the ring 108 remains in contact with stationary hosing 104 and rotary housing 102 during rotary motion, preventing ingress of dust/dirt.

The light preload forces the ring 108 to be conical. The light preload minimizes the rotary drag. High or heavy preload would cause higher drag during rotary motion of the joint. Preload may be measured in two ways: the distance the seal 108 deflected along its axis and the amount of force required to load the seal 108. In an embodiment, the deflection distance (size of the seal gap) is 0.05mm by design and the force required to preload the seal is estimated at 33N. Once installed, the seal shield 108 inhibits ingress of soil or dust particles to the actuator 100.

The ring 108 is deformed into a conical or cupped shape via a two-point contact using features in the surrounding structure (rotary housing 102 and stationary housing 104). The two-point contact is around the circumference of the ring 108 at both points/locations of the rotary housing 102 and stationary housing 104 (shoulder or lip 302, annular surface 304). In particular, the rotary housing 102 includes a first ring deforming feature and the stationary housing 104 includes a second ring deforming feature, where the first and second ring deforming features are used to deform the ring into the preloaded conical shape. The contact is around the circumference of the ring 108, at both points/locations 302, 304. The inner diameter of the seal 108 is held by a lip feature 302. In an embodiment, the lip feature 302 is a 0.5mm lip. The outer diameter of the seal 108 (or opposite face of the seal 108) is held by a chamfer 304. In an embodiment, the chamfer 304 is a 15° chamfer. There is an overlap of the first and second deforming features 302, 304 that cause the shield 108 to be deformed into a cone.

The shape of the contact points on the rotary housing 102 and stationary housing 104 that are used to deform or preload the shield 108 into a conical shape ensure that no particulate can "wedge" itself into and past the shield 108. The way the seal bends from the lip 302 on the inner diameter (of the seal 108) and chamfer 304 on the opposite side/outer diameter of the seal shield 108 prevents particulate ingress by blocking any path into the actuator 100.

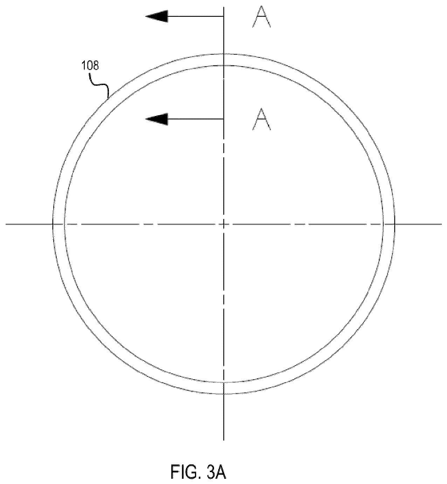

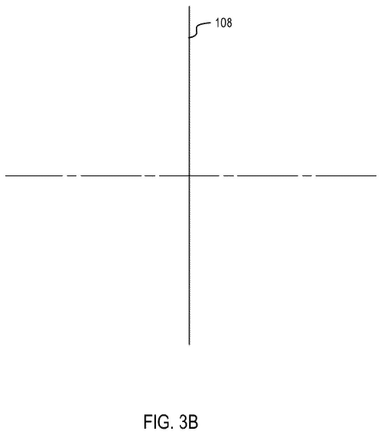

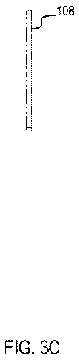

Figures 3A-3C illustrate the seal shield 108 in an undeformed or undeflected state.

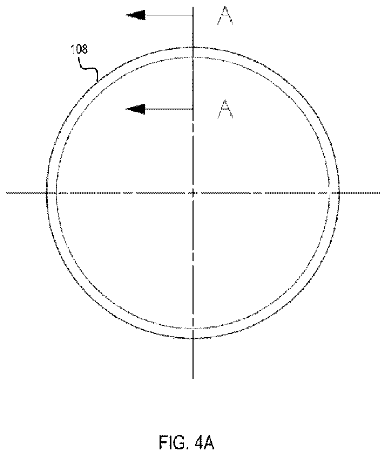

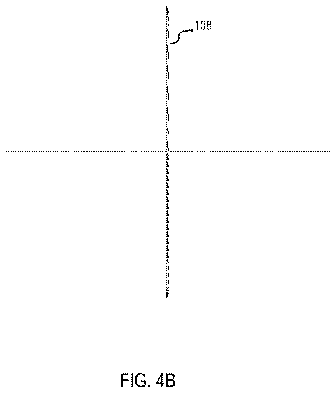

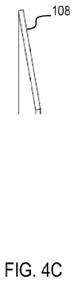

Figures 4A-4C illustrate the seal shield 108 in a deformed or deflected state.

The seal shield 108 may provide particular advantages. The seal shield 108 has a metallic ring design that may provide significantly improved abrasion resistance, particularly compared to non-metallics (such as PTFE or other soft materials), affecting the performance of the actuator 100 (e.g., via increased drag, etc.). In some embodiments, the seal shield 108 is so effective that the shield could be considered the actuator seal in itself. The seal shield 108 may be more mass efficient, despite being metallic, than current seals. The seal shield 108, being a thin, flat metal ring takes up little volume, and significantly less volume than brush or felt seals, or PFTE seals. For example, PTFE seals and similar designs are physically larger and require housing features to properly seat the seal. Felt and labyrinth seal designs also require more volume. The seal shield is less sensitive to large temperature changes than non-metallic seal options, which can be particularly advantageous in space-based applications where CTE mismatch between materials is an important consideration for extending operating life. The seal shield 108 is insensitive to abrasive material such as soil and dust.

While the above description provides examples of one or more apparatus, methods, or systems, it will be appreciated that other apparatus, methods, or systems may be within the scope of the claims as interpreted by one of skill in the art.

## Claims

1. An apparatus for shielding a rotary interface to prevent ingress of abrasive media, the apparatus comprising:
a flat metallic ring that is installed between a rotary housing containing a rotating component and a stationary housing containing a stationary component configured to interface with the rotating component to provide rotational motion, the rotary housing configured to couple to the stationary housing and rotate with respect to the stationary housing when coupled;
wherein the flat metallic ring is preloaded into a conical shape when installed between the rotary housing and the stationary housing.

2. The apparatus of claim 1, wherein the metallic ring is stainless steel.

3. The apparatus of claim 1, wherein the metallic ring is dry film lubricated.

4. The apparatus of claim 3, wherein the metallic ring is dry film lubricated by applying a dry film lubricant on all sliding surfaces of the metallic ring.

5. The apparatus of claim 4, wherein the dry film lubricant is Molybdenum Disulphide with an inorganic binder.

6. The apparatus of claim 1, wherein a v-spring shield is disposed between the stationary housing and the apparatus.

7. The apparatus of claim 1, wherein the rotary housing includes a first ring deforming feature and the stationary housing includes a second ring deforming feature, and wherein the first and second ring deforming features deform the metallic ring into the conical shape.

8. The apparatus of claim 1, wherein the preload for deforming the metallic ring is applied using a two-point contact with the metallic ring along the circumference of the metallic ring, wherein a first contact is provided by the rotary housing and a second contact is provided by the stationary housing.

9. The apparatus of claim 7, wherein the first ring deforming feature is a chamfer and the second ring deforming feature is a lip or shoulder.

10. The apparatus of claim 7, wherein the metallic ring includes an inner diameter and an outer diameter on opposite sides of the metallic ring, and wherein the metallic ring bends from the second ring deforming feature on the inner diameter and the first ring deforming feature on the outer diameter.

11. The apparatus of claim 7, wherein the metallic ring is preloaded onto a flat annular surface of the stationary housing and onto a shoulder or lip of the rotary housing, the annular surface and shoulder for reacting the preload of the metallic ring such that the metallic ring forms a conical shape under preload, thereby remaining in contact with the stationary housing and the rotary housing during rotary motion.
